# EUROPEAN PATENT SPECIFICATION

(11) **EP 4 429 280 B1**
(45) Date of publication and mention of the grant of the patent: **02.12.2026**
(21) Application number: 22889197.4
(22) Date of filing: 28.10.2022
(51) Int. Cl.: H04L 65/1016, H04L 65/1069, H04L 65/1096, H04L 65/1104, H04W 4/16, H04W 4/90, H04W 80/10

(54) **EMERGENCY CALL METHOD AND APPARATUS, MOBILE TERMINAL, AND NETWORK SIDE DEVICE**
NOTRUFVERFAHREN UND -VORRICHTUNG, MOBILES ENDGERÄT UND NETZWERKSEITIGE VORRICHTUNG
PROCÉDÉ ET APPAREIL D'APPEL D'URGENCE, TERMINAL MOBILE, ET DISPOSITIF CÔTÉ RÉSEAU

(30) Priority: 02.11.2021 CN 202111288618
(43) Date of publication of application: 11.09.2024
(73) Proprietor: Vivo Mobile Communication Co., Ltd., Dongguan, Guangdong 523863 (CN)
(72) Inventor: SHENG, Weiming, Dongguan, Guangdong 523863 (CN)
(74) Representative: Lavoix
(86) International application number: PCT/CN2022/128238
(87) International publication number: WO 2023/078172

(56) References cited:
- EP-B1- 3 158 720
- WO-A1-2020/102588
- CN-A- 113 993 092
- JP-A- 2015 138 988
- US-A1- 2008 304 630
- US-A1- 2009 116 623
- US-A1- 2013 156 169
- US-A1- 2019 312 966
- US-A1- 2020 068 650

## Description

### TECHNICAL FIELD

This application relates to the technical field of communications, and specifically relates to an emergency call method and apparatus, a mobile terminal, and a network side device.

### BACKGROUND

At present, an Internet Protocol (Internet Protocol, IP) multimedia subsystem (IP Multimedia Subsystem, IMS) phone emergency call function has been implemented for mobile terminals. However, at present, there are particular factors that may cause an emergency call to fail, such as an anomaly of a network device, or human factors in an emergency center or of an emergency contact or the like, and therefore a person in an emergency cannot obtain assistance in time.

WO 2020/102588 A1 discloses a technology for a user equipment (UE) operable to encode an emergency contact list for transmission to an emergency center.

EP 3 158 720 B1 discloses a method of operating an emergency call procedure in a telecommunications network includes storing, for a user of an IMS network, emergency contact Uniform Resource Identifiers (URis) of one or more emergency contacts of the user such as family or friends who may be contacted by emergency services in the event of an emergency call from the user. The method also includes receiving an emergency call from the user and providing the emergency contact URIs to a Public Safety Answering Point, PSAP.

US 2020/068650 A1 discloses an emergency notification SMS messaging during E911 call. This disclosure is directed to generating and sending an emergency notification short message service (SMS) message to one or more registered contacts of a user when the user's user equipment (UE) is used to call enhanced 911 (E911).

### SUMMARY

The invention is set out in the appended set of claims. An objective of embodiments of this application is to provide an emergency call method and apparatus, a mobile terminal, and a network side device, which can solve the problem in the prior art that a single-number emergency call may fail and as a result a person in an emergency cannot obtain assistance in time.

The present invention is defined in the accompanying claims.

In the embodiments of this application, when the first emergency call to the first number is initiated, the number of the at least one emergency contact is added to the header field of the SIP message sent to the IMS network, so that the IMS network continues to initiate a call to the number of the at least one emergency contact no matter whether the first emergency call to the first number is successfully connected. Therefore, emergency calls to a plurality of numbers can be implemented by one operation, thereby reducing complicated operations of repeated dialing by the user, and in addition, improving a success rate of the emergency calls.

### BRIEF DESCRIPTION OF THE DRAWINGS

FIG. 1 is a schematic flowchart of an emergency call method applied to a mobile terminal according to an embodiment of this application;
FIG. 2 is a schematic structural diagram of an emergency call apparatus applied to a mobile terminal according to an embodiment of this application;
FIG. 3 is a schematic flowchart of an emergency call method applied to a network side device according to an embodiment of this application;
FIG. 4 is a schematic structural diagram of an emergency call apparatus applied to a network side device according to an embodiment of this application;
FIG. 5 is a schematic structural diagram of a mobile terminal according to an embodiment of this application;
FIG. 6 is a schematic structural diagram of a network side device according to an embodiment of this application; and
FIG. 7 is a schematic structural diagram of hardware of a mobile terminal for implementing an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by those of ordinary skill in the art based on the embodiments of this application fall within the protection scope of this application.

The specification and claims of this application, and terms "first" and "second" are used to distinguish similar objects, but are unnecessarily used to describe a specific sequence or order. It is to be understood that data used in this way is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" used in this specification and the claims represents at least one of the connected objects, and the character "/" generally indicates that the associated objects are in an "or" relationship.

The emergency call method and apparatus, the mobile terminal, and the network side device provided in the embodiments of this application are described in detail below with reference to the accompanying drawings through specific embodiments and application scenarios thereof.

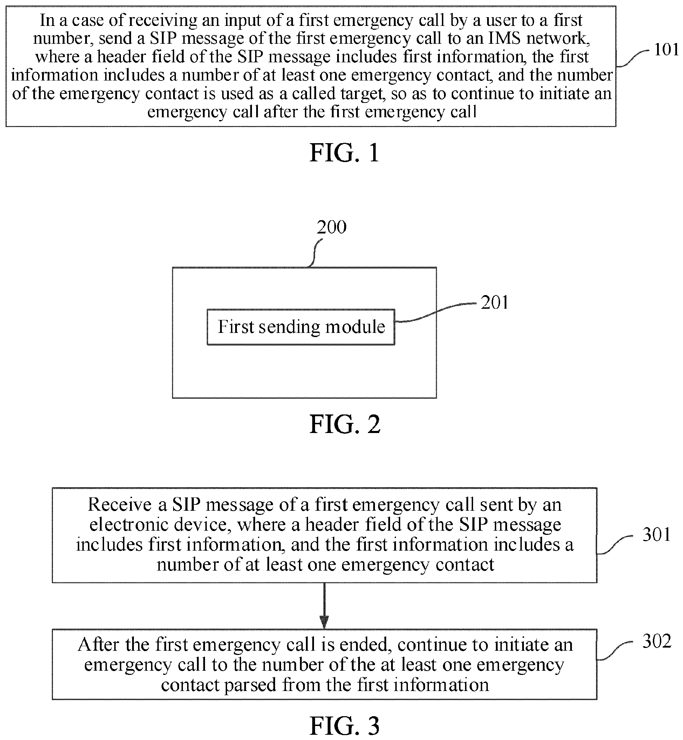

Referring to FIG. 1, FIG. 1 is a schematic flowchart of an emergency call method applied to a mobile terminal according to an embodiment of this application. As shown in FIG. 1, an embodiment according to a first aspect of this application provides an emergency call method. The method is applied to a mobile terminal. The method includes the following steps.

Step 101: In a case of receiving an input of a first emergency call by a user to a first number, send a SIP message of the first emergency call to an IMS network, where
a header field of the SIP message includes first information, the first information includes a number of at least one emergency contact, and the number of the emergency contact is used as a called target, so as to continue to initiate an emergency call after the first emergency call.

The first number may be a contact number of an emergency center or the like. The user may enable the mobile terminal to call the first number by dialing. The mobile terminal may send a Session Initialization Protocol (SIP) message of the first emergency call to the IMS network during initiating, to the IMS network, the first emergency call to the first number. In embodiments of this application, the first information is added to the header field of the SIP message, the first information includes the number of the at least one emergency contact, and numbers of these emergency contacts are used as called targets; then, after the first emergency call is ended, the IMS network continues to initiate an emergency call to the numbers of these emergency contacts.

In other words, after receiving the SIP message sent by the mobile terminal, the IMS network may parse the received SIP message, to obtain the number of the at least one emergency contact added to the header field of the SIP message, and in addition, initiate a call to the first number. In a case that the call can be successfully established, the user can normally make a call with a called party by using the mobile terminal; and in a case that the call establishment fails due to factors such as that there is an anomaly in the network device or the called party does not answer the call, the user cannot normally make a call with the called party by using the mobile terminal. In the prior art, the emergency call this time is to be ended. However, in embodiments of this application, since the first information is added to the header field of the SIP message, after the first emergency call to the first number or a call is ended (no matter whether the first number is successfully connected), the IMS network may continue to initiate a call to the number of the at least one emergency contact obtained by parsing from the header field of the SIP message. Therefore, in embodiments of this application, after one call input is performed, calls to a plurality of numbers, including a call to the emergency center and also including calls to other emergency contacts that the user wants to contact with, can be implemented, thereby reducing complicated operations when the user calls the plurality of numbers in an emergency, and also improving a success rate of emergency calls.

When the IMS network continues to initiate the call to the number of the at least one emergency contact parsed from the header field of the SIP message, calls may be initiated one by one according to a preset priority of the at least one emergency contact.

Optionally, in embodiments of this application, the number of the at least one emergency contact included in the first information added to the header field of the SIP message may be preset by the user, that is, the user may preset the at least one emergency contact and the corresponding number. In a case that the mobile terminal initiates the first emergency call to the first number, the mobile terminal may automatically query whether the user has set an emergency contact and a corresponding number; if so, the mobile terminal adds the number of the at least one emergency contact to the header field of the SIP message of the first emergency call and sends the SIP message to the IMS network.

In the embodiments of this application, when the first emergency call to the first number is initiated, the number of the at least one emergency contact is added to the header field of the SIP message sent to the IMS network, so that the IMS network continues to initiate a call to the number of the at least one emergency contact no matter whether the first emergency call to the first number is successfully connected. Therefore, emergency calls to a plurality of numbers can be implemented by one operation, thereby reducing complicated operations of repeated dialing by the user, and in addition, improving a success rate of the emergency calls.

In some embodiments of this application, after the sending a SIP message of the first emergency call to an IMS network, the method further includes:
in a case of receiving call failure information sent by the IMS network, initiating an IP network call by using instant messaging software to a target account associated with the number of the emergency contact in the instant messaging software, where
the call failure information is used for indicating that the emergency call to the number of the at least one emergency contact fails.

Exemplarily, in a case that the emergency call to the number of the at least one emergency contact fails, the mobile terminal may receive call failure information sent by the IMS network, to learn that the emergency call to the number of the at least one emergency contact fails. In this case, in order to contact the emergency contact, the mobile terminal finds instant messaging software installed on the mobile terminal and associated with a local address book of the mobile terminal by using the number of the at least one emergency contact, and initiates, in the corresponding instant messaging software, an IP network call to the target account associated with the number of the emergency contact, so as to successfully establish a call with the corresponding emergency contact, thereby improving a success rate of emergency calls, so that the person in an emergency can obtain assistance in time.

In embodiments of this application, the initiating an IP network call by using instant messaging software to a target account associated with the number of the emergency contact in the instant messaging software includes:
according to the number of the emergency contact, querying from all instant messaging software on the mobile terminal for target accounts associated with the number of the emergency contact; and
according to priorities of the instant messaging software, calling all the target accounts one by one.

The user can find instant messaging software associated with the local address book among all instant messaging software on the mobile terminal according to the number of the emergency contact, query for a target account associated with the number of the emergency contact in these instant messaging software, and then initiate an IP network call to the target account in the corresponding instant messaging software. In a case that there are a plurality of instant messaging software and corresponding target accounts, an order of IP network calls can be determined according to priorities of the instant messaging software. Certainly, in some embodiments, the order of the IP network calls may alternatively be determined according to priorities of emergency contacts, and the priorities of the emergency contacts may be preset by the user.

Optionally, the priorities of the instant messaging software may be determined according to frequencies of contacting with the target accounts. For example, in a case that a contact frequency with a target account in a first instant messaging software is higher than a contact frequency with the target account in a second instant messaging software, an IP network call is preferentially initiated to the corresponding target account by using the first instant messaging software. Therefore, the user may first establish contact with a closest emergency contact, and inform the emergency contact of an emergency situation of the user as quickly as possible.

In some other embodiments of this application, after the sending a SIP message of the first emergency call to an IMS network, the method further includes:
sending a short message to the first number and/or the number of the at least one emergency contact, and/or sending an emergency message by using the instant messaging software to the target account associated with the number of the emergency contact in the instant messaging software, where
the short message or the emergency message is used for prompting that the user of the mobile terminal is in an emergency.

In embodiments of this application, optionally, after the SIP message of the first emergency call is sent to the IMS network, a short message may be sent to the first number and/or the number of the at least one emergency contact, to prompt that the user of the mobile terminal is in an emergency, and/or an emergency message is sent, by using instant messaging software, to a target account associated with the number of the emergency contact in the instant messaging software, to prompt that the user of the mobile terminal is in an emergency.

Optionally, the emergency message may further include current location information of the mobile terminal, that is, the current location information of the mobile terminal is shared with the emergency contact, so that the emergency contact can quickly determine the location of the user of the mobile terminal.

In order to avoid sending a short message or an emergency message to the emergency contact after the call with the emergency contact is successfully established, optionally, the short message or the emergency message may be sent to the emergency contact only when the IP network call initiated by the instant messaging software to the target account associated with the number of the emergency contact also fails.

In conclusion, in the embodiments of this application, when the first emergency call to the first number is initiated, the number of the at least one emergency contact is added to the header field of the SIP message sent to the IMS network, so that the IMS network continues to initiate a call to the number of the at least one emergency contact no matter whether the first emergency call to the first number is successfully connected. Therefore, emergency calls to a plurality of numbers can be implemented by one operation, thereby reducing complicated operations of repeated dialing by the user, and in addition, improving a success rate of the emergency calls.

It should be noted that an execution body of the emergency call method provided in embodiments of this application may be an emergency call apparatus, or a control module, in the emergency call apparatus, for performing the emergency call method. In embodiments of this application, an example in which the emergency call apparatus executes the emergency call method is used to describe the emergency call apparatus provided in embodiments of this application.

Referring to FIG. 2, FIG. 2 is a schematic structural diagram of an emergency call apparatus applied to a mobile terminal according to an embodiment of this application. As shown in FIG. 2, an embodiment according to another aspect of this application also provides an emergency call apparatus. The apparatus is applied to a mobile terminal. The apparatus 200 includes:
a first sending module 201, configured to: in a case of receiving an input of a first emergency call by a user to a first number, send a SIP message of the first emergency call to an IMS network, where
a header field of the SIP message includes first information, the first information includes a number of at least one emergency contact, and the number of the emergency contact is used as a called target, so as to continue to initiate an emergency call after the first emergency call.

In some embodiments of this application, the apparatus 200 further includes:
a call module, configured to: in a case of receiving call failure information sent by the IMS network, initiate an IP network call by using instant messaging software to a target account associated with the number of the emergency contact in the instant messaging software, where
the call failure information is used for indicating that the emergency call to the number of the at least one emergency contact fails.

In some embodiments of this application, the call module includes:
a query unit, configured to: according to the number of the emergency contact, query from all instant messaging software on the mobile terminal for target accounts associated with the number of the emergency contact; and
a call unit, configured to: according to priorities of the instant messaging software, call all the target accounts one by one.

In some embodiments of this application, optionally, the apparatus 200 further includes:
a second sending module, configured to send a short message to the first number and/or the number of the at least one emergency contact, and/or send an emergency message by using the instant messaging software to the target account associated with the number of the emergency contact in the instant messaging software, where
the short message or the emergency message is used for prompting that the user of the mobile terminal is in an emergency.

In the embodiments of this application, when the first emergency call to the first number is initiated, the number of the at least one emergency contact is added to the header field of the SIP message sent to the IMS network, so that the IMS network continues to initiate a call to the number of the at least one emergency contact no matter whether the first emergency call to the first number is successfully connected. Therefore, emergency calls to a plurality of numbers can be implemented by one operation, thereby reducing complicated operations of repeated dialing by the user, and in addition, improving a success rate of the emergency calls.

The emergency call apparatus in embodiments of this application may be an apparatus, or may be a component, an integrated circuit, or a chip in a terminal. The apparatus may be a mobile phone, a tablet computer, a notebook computer, a palm computer, an in-vehicle electronic device, a wearable device, an ultra-mobile personal computer (UMPC), a netbook, a personal digital assistant (PDA), a personal computer (PC), or the like, which are not specifically limited in embodiments of this application.

The emergency call apparatus in embodiments of this application may be an apparatus having an operating system. The operating system may be an Android operating system, may be an iPhone Operating System (iOS) operating system, or may be another possible operating system, which is not specifically limited in embodiments of this application.

The emergency call apparatus provided in embodiments of this application may implement various processes implemented by the method embodiments of FIG. 1, which are not repeated herein in order to avoid duplication.

Referring to FIG. 3, FIG. 3 is a schematic flowchart of an emergency call method applied to a network side device according to an embodiment of this application. As shown in FIG. 3, an embodiment according to another aspect of this application provides an emergency call method. The method is applied to a network side device. The method includes the following steps.

Step 301: Receive a SIP message of a first emergency call sent by a mobile terminal, where a header field of the SIP message includes first information, and the first information includes a number of at least one emergency contact.

After receiving the SIP message of the first emergency call sent by the mobile terminal, the network side device initiates a call to the first number. In a case that a call can be successfully established, the user can normally make a call with the called party by using the mobile terminal; and in a case that the call establishment fails due to factors such as that the called party does not answer the call, the user cannot normally make a call with the called party by using the mobile terminal. In addition, the network side device may parse the received SIP message, to obtain by parsing the number of the at least one emergency contact added to the header field of the SIP message.

Step 302: After the first emergency call is ended, continue to initiate an emergency call to the number of the at least one emergency contact parsed from the first information.

In embodiments of this application, after the first emergency call is ended (no matter whether the call to the first number is successfully connected), the network side device may continue to initiate a call to the number of the at least one emergency contact obtained by parsing from the header field of the SIP message.

Optionally, in a process of continuing to initiate an emergency call to the number of the at least one emergency contact parsed from the first information, calls may be initiated one by one according to a preset priority of the at least one emergency contact.

Therefore, in embodiments of this application, after one call input is performed, calls to a plurality of numbers, including a call to the emergency center and also including calls to other emergency contacts that the user wants to contact with, can be implemented, thereby reducing complicated operations required when the user calls the plurality of numbers in an emergency, and also improving a success rate of emergency calls.

In some embodiments of this application, after the continuing to initiate an emergency call to the number of the at least one emergency contact parsed from the first information, the method further includes:
in a case that the emergency call to the number of the at least one emergency contact fails, sending call failure information to the mobile terminal.

Specifically, in a case that the emergency call to the number of the at least one emergency contact fails, the network side device may send call failure information to the mobile terminal, so that the mobile terminal learns, by using the received call failure information, that the emergency call to the number of the at least one emergency contact fails, and further that the user subsequently contact with the emergency contact in other ways by using the mobile terminal.

In conclusion, in the embodiments of this application, the network side device adds the number of the at least one emergency contact to the header field of the SIP message, so that the network side device subsequently continues to initiate a call to the number of the at least one emergency contact no matter whether the first emergency call to the first number is successfully connected. Therefore, the user can implement emergency calls to a plurality of numbers by one operation, thereby reducing complicated operations of repeated dialing by the user, and in addition, improving a success rate of emergency calls.

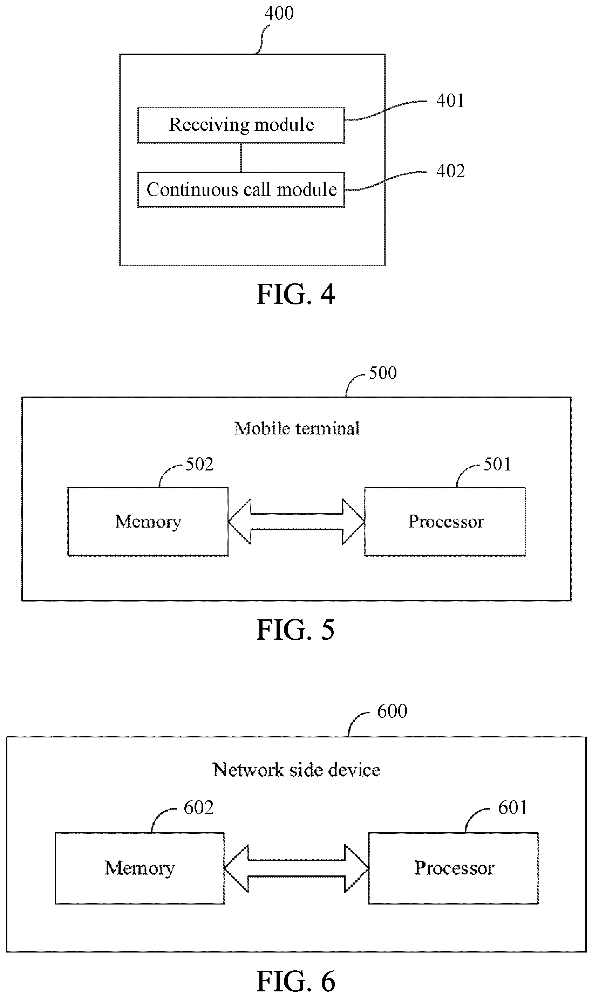

Referring to FIG. 4, FIG. 4 is a schematic structural diagram of an emergency call apparatus applied to a network side device according to an embodiment of this application. As shown in FIG. 4, an embodiment according to another aspect of this application also provides an emergency call apparatus. The apparatus is applied to a network side device. The apparatus 400 includes:
a receiving module 401, configured to receive a SIP message of a first emergency call sent by a mobile terminal, where a header field of the SIP message includes first information, and the first information includes a number of at least one emergency contact; and
a continuous call module 402, configured to: after the first emergency call is ended, continue to initiate an emergency call to the number of the at least one emergency contact parsed from the first information.

In some embodiments of this application, optionally, the apparatus 400 further includes:
a third sending module, configured to: in a case that the emergency call to the number of the at least one emergency contact fails, send call failure information to the mobile terminal.

In the embodiments of this application, the network side device adds the number of at least one emergency contact to the header field of the SIP message, so that the network side device may subsequently continue to initiate a call to the number of the at least one emergency contact no matter whether the first emergency call to the first number is successfully connected. Therefore, the user can implement emergency calls to a plurality of numbers by one operation, thereby reducing complicated operations of repeated dialing by the user, and in addition, improving a success rate of emergency calls.

The emergency call apparatus provided in embodiments of this application may implement various processes implemented by the method embodiments of FIG. 3, which are not repeated herein in order to avoid duplication.

Optionally, as shown in FIG. 5, an embodiment of this application further provides a mobile terminal 500, including a processor 501, a memory 502, a program or instructions stored on the memory 502 and capable of being run on the processor 501. The program or the instructions, when executed by the processor 501, implement the processes of the foregoing embodiments of the emergency call method applied to the mobile terminal, and in addition, the same technical effect can be achieved, which are not repeated herein in order to avoid duplication.

It should be noted that the mobile terminal in embodiments of this application may be a mobile phone, a tablet computer, a notebook computer, a palm computer, an in-vehicle electronic device, a wearable device, an ultra-mobile personal computer (UMPC), a netbook, or a personal digital assistant (PDA), a personal computer (PC), or the like, which are not specifically limited in embodiments of this application.

Optionally, as shown in FIG. 6, an embodiment of this application further provides a network side device 600, including a processor 601, a memory 602, a program or instructions stored on the memory 602 and capable of being run on the processor 601. The program or the instructions, when executed by the processor 601, implement the processes of the foregoing embodiments of the emergency call method, and in addition, the same technical effect can be achieved, which are not repeated herein in order to avoid duplication.

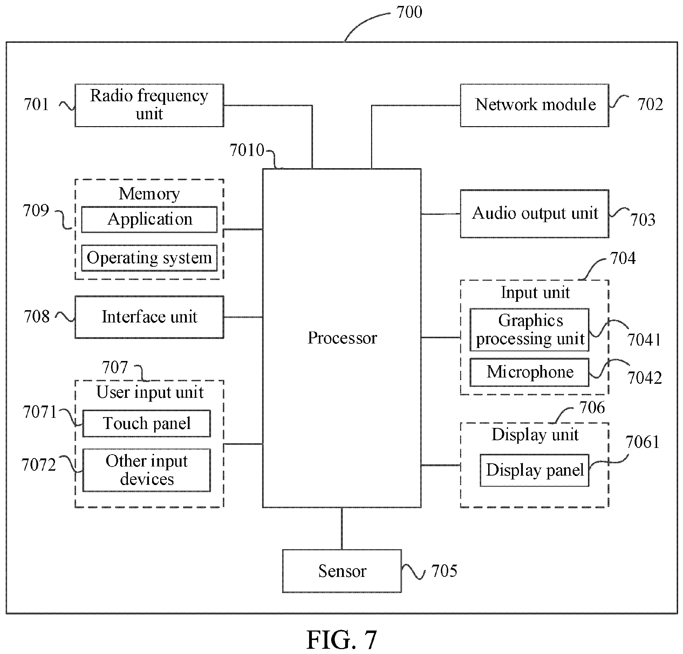

FIG. 7 is a schematic structural diagram of hardware of a mobile terminal for implementing an embodiment of this application.

The mobile terminal 700 includes, but is not limited to, components such as a radio frequency unit 701, a network module 702, an audio output unit 703, an input unit 704, a sensor 705, a display unit 706, a user input unit 707, an interface unit 708, a memory 709, and a processor 7010.

A person skilled in the art may understand that the mobile terminal 700 may further include a power supply (such as a battery) for supplying power to the components. The power supply may be logically connected to the processor 7010 by a power management system, thereby implementing functions such as charging, discharging, and power consumption management by using the power management system. The mobile terminal structure shown in FIG. 7 constitutes no limitation on the mobile terminal, and the mobile terminal may include more or fewer components than those shown in the figure, or some components may be combined, or a different component deployment may be used, which are not described herein again.

The radio frequency unit 701 is configured to: in a case of receiving an input of a first emergency call by a user to a first number, send a SIP message of the first emergency call to an IMS network, where
a header field of the SIP message includes first information, the first information includes a number of at least one emergency contact, and the number of the emergency contact is used as a called target, so as to continue to initiate an emergency call after the first emergency call.

In the embodiments of this application, when the first emergency call to the first number is initiated, the number of the at least one emergency contact is added to the header field of the SIP message sent to the IMS network, so that the IMS network continues to initiate a call to the number of the at least one emergency contact no matter whether the first emergency call to the first number is successfully connected. Therefore, emergency calls to a plurality of numbers can be implemented by one operation, thereby reducing complicated operations of repeated dialing by the user, and in addition, improving a success rate of the emergency calls.

Optionally, the network module 702 is configured to: in a case of receiving call failure information sent by the IMS network, initiate an IP network call by using instant messaging software to a target account associated with the number of the emergency contact in the instant messaging software, where
the call failure information is used for indicating that the emergency call to the number of the at least one emergency contact fails.

Optionally, the processor 7010 is configured to: according to the number of the emergency contact, query from all instant messaging software on the mobile terminal for target accounts associated with the number of the emergency contact; and
the network module 702 is further configured to: according to priorities of the instant messaging software, call all the target accounts one by one.

Optionally, the radio frequency unit 701 is further configured to send a short message to the first number and/or the number of at least one emergency contact; and
The network module 702 is further configured to send an emergency message by using the instant messaging software to a target account associated with the number of the emergency contact in the instant messaging software, where
the short message or the emergency message is used for prompting that the user of the mobile terminal is in an emergency.

It should be understood that, in embodiments of this application, the input unit 704 may include a graphics processing unit (GPU) 7041 and a microphone 7042. The graphics processing unit 7041 performs processing on image data of a static picture or a video that is obtained by an image capture apparatus (for example, a camera) in a video capture mode or an image capture mode. The display unit 706 may include a display panel 7061, and the display panel 7061 may be configured in the form of a liquid crystal display, an organic light emitting diode, or the like. The user input unit 707 includes a touch panel 7071 and other input devices 7072. The touch panel 7071 is also referred to as a touchscreen. The touch panel 7071 may include a touch detection apparatus and a touch controller. The another input device 7072 may include, but is not limited to, a physical keyboard, a function key (such as a volume control key, a switch key, or the like), a trackball, a mouse, and an operating lever, which is not described in detail herein. The memory 709 may be configured to store software programs and various data, including but not limited to application programs and operating systems. The processor 7010 may integrate an application processor and a modem processor. The application processor mainly processes an operating system, a user interface, an application program, and the like. The modem processor mainly processes wireless communication. It may be understood that the foregoing modem processor may also not be integrated into the processor 7010.

An embodiment of this application further provides a readable storage medium. The readable storage medium stores a program or instructions. The program or instructions, when executed by a processor, cause the processor to perform the processes of the foregoing emergency call method embodiments, and in addition, the same technical effect can be achieved, which are not repeated herein in order to avoid duplication.

The processor is the processor in the mobile terminal described in the foregoing embodiment. The readable storage medium includes a computer-readable storage medium, such as a computer read-only memory (ROM), a random access memory (RAM), a disk, an optical disk, or the like.

An embodiment of this application further provides a chip. The chip includes a processor and a communication interface. The communication interface is coupled to the processor. The processor is configured to run a program or instructions to implement the processes of the foregoing emergency call method embodiments, and in addition, the same technical effect can be achieved, which are not repeated herein in order to avoid duplication.

It should be understood that the chip mentioned in embodiments of this application may also be referred to as a system on chip, a system chip, a chip system, or a system-on-a-chip.

It should be noted that the terms "include", "include", or any other variation thereof in this specification is intended to cover a non-exclusive inclusion, so that the stated processes, methods, objects, or apparatuses including a series of elements not only include those elements, but also include other elements not explicitly listed, or further include elements inherent to such the processes, methods, objects, or apparatuses. Without more limitations, elements defined by the sentence "including one" does not exclude that there are still other same elements in the processes, methods, objects, or apparatuses. In addition, it should be pointed out that the scope of the method and apparatus in the embodiments of this application is not limited to performing functions in the order shown or discussed, and may also include performing functions in a substantially simultaneous manner or in a reverse order based on the functions involved. For example, the described methods may be performed in an order different from the described order, and various steps may be added, omitted, or combined. In addition, the features described with reference to some examples can be combined in other examples.

According to the descriptions in the foregoing implementations, a person skilled in the art may clearly learn that the method according to the foregoing embodiments may be implemented by relying on software and a commodity hardware platform or by using hardware, and in most cases the former is the preferred. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable an electronic device (which may be a mobile phone, a computer, a server, a network device, or the like) to perform the methods described in the embodiments of this application.

The embodiments of this application have been described above with reference to the accompanying drawings. The invention is defined by the appended claims.

## Claims

1. An emergency call method, applied to a mobile terminal, comprising:
in a case of receiving an input of a first emergency call by a user to a first number, sending (101) a SIP message of the first emergency call to an IMS network,
a header field of the SIP message comprises first information, the first information comprises a number of at least one emergency contact, and the number of the emergency contact is used as a called target, so that the IMS network continues to initiate an emergency call after initiating the first emergency call to the first number, no matter whether the first number is successfully connected;
wherein after the sending (101) a SIP message of the first emergency call to an IMS network, the method further comprises:
in a case of receiving call failure information sent by the IMS network, initiating an IP network call by using instant messaging software to a target account associated with the number of the emergency contact in the instant messaging software, wherein
the call failure information is used for indicating that the emergency call to the number of the at least one emergency contact fails; wherein the initiating an IP network call by using instant messaging software to a target account associated with the number of the emergency contact in the instant messaging software comprises:
according to the number of the emergency contact, querying from all instant messaging software on the mobile terminal for target accounts associated with the number of the emergency contact; and
according to priorities of the instant messaging software, calling all the target accounts one by one.

2. The method according to claim 1, wherein after the sending (101) a SIP message of the first emergency call to an IMS network, the method further comprises:
sending a short message to the first number and/or the number of the at least one emergency contact, and/or sending an emergency message by using the instant messaging software to the target account associated with the number of the emergency contact in the instant messaging software, wherein
the short message or the emergency message is used for prompting that the user of the mobile terminal is in an emergency.

3. An emergency call method, applied to a network side device, comprising:
receiving (301) a SIP message of a first emergency call sent by a mobile terminal, wherein a header field of the SIP message comprises first information, and the first information comprises a number of at least one emergency contact; and
after the first emergency call is ended, continuing (302) to initiate an emergency call to the number of the at least one emergency contact parsed from the first information, no matter whether the first number is successfully connected; wherein after the continuing (302) to initiate an emergency call to the number of the at least one emergency contact parsed from the first information, the method further comprising:
in a case that the emergency call to the number of the at least one emergency contact fails, sending call failure information to the mobile terminal to enable the mobile terminal according to the number of the emergency contact, to query from all instant messaging software on the mobile terminal for target accounts associated with the number of the emergency contact; and according to priorities of the instant messaging software, call all the target accounts one by one.

4. An emergency call apparatus (200), applied to a mobile terminal, comprising:
a first sending module (201), configured to: in a case of receiving an input of a first emergency call by a user to a first number, send a SIP message of the first emergency call to an IMS network,
a header field of the SIP message comprises first information, the first information comprises a number of at least one emergency contact, and the number of the emergency contact is used as a called target, so that the IMS network continues to initiate an emergency call after initiating the first emergency call to the first number, no matter whether the first number is successfully connected;
wherein the apparatus (200) further comprises:
a call module, configured to: in a case of receiving call failure information sent by the IMS network, initiate an IP network call by using instant messaging software to a target account associated with the number of the emergency contact in the instant messaging software;
wherein the call failure information is used for indicating that the emergency call to the number of the at least one emergency contact fails;
the call module comprising:
a query unit, configured to: according to the number of the emergency contact, query from all instant messaging software on the mobile terminal for target accounts associated with the number of the emergency contact;
a call unit, configured to: according to priorities of the instant messaging software, call all the target accounts one by one.

5. An emergency call apparatus (400), applied to a network side device, comprising:
a receiving module (401), configured to receive a SIP message of a first emergency call sent by a mobile terminal, wherein a header field of the SIP message comprises first information, and the first information comprises a number of at least one emergency contact; and
wherein the emergency call apparatus (400) further comprises a continuous call module (402), configured to: after the first emergency call is ended, continue to initiate an emergency call to the number of the at least one emergency contact parsed from the first information, no matter whether the first number is successfully connected;
the apparatus (400) further comprising:
a third sending module, configured to: in a case that the emergency call to the number of the at least one emergency contact fails, send call failure information to the mobile terminal to enable the mobile terminal according to the number of the emergency contact, to query from all instant messaging software on the mobile terminal for target accounts associated with the number of the emergency contact; and according to priorities of the instant messaging software, call all the target accounts one by one.

6. A readable storage medium, **characterized by** storing a program or instructions, wherein the program or instructions, when executed by a processor, implement the method according to any one of claims 1 to 2, or the program or instructions, when executed by a processor, implement the method according to claim 3.

7. A computer program product, stored in a non-volatile storage medium, wherein the program product, when executed by at least one processor, implements the method according to any one of claims 1 to 2 or to implement the method according to claim 3.

## Patentansprüche

1. Ein Notrufverfahren, angewendet auf ein mobiles Endgerät, umfassend:
in einem Fall des Empfangens einer Eingabe eines ersten Notrufs durch einen Benutzer an eine erste Rufnummer, Senden (101) einer SIP-Nachricht des ersten Notrufs an ein IMS-Netz,
ein Headerfeld der SIP-Nachricht umfasst eine erste Information, die erste Information umfasst eine Rufnummer mindestens eines Notfallkontakts, und die Rufnummer des Notfallkontakts wird als angerufenes Ziel verwendet, sodass das IMS-Netz nach dem Einleiten des ersten Notrufs an die erste Rufnummer weiterhin einen Notruf einleitet, unabhängig davon, ob die erste Rufnummer erfolgreich verbunden wird;
wobei das Verfahren nach dem Senden (101) einer SIP-Nachricht des ersten Notrufs an ein IMS-Netz ferner umfasst:
in einem Fall des Empfangens einer durch das IMS-Netz gesendeten Anruffehlerinformation, Einleiten eines IP-Netzanrufs unter Verwendung von Instant-Messaging-Software an ein Zielkonto, das der Rufnummer des Notfallkontakts in der Instant-Messaging-Software zugeordnet ist, wobei
die Anruffehlerinformation verwendet wird, um anzuzeigen, dass der Notruf an die Rufnummer des mindestens einen Notfallkontakts fehlschlägt; wobei das Einleiten eines IP-Netzanrufs unter Verwendung von Instant-Messaging-Software an ein Zielkonto, das der Rufnummer des Notfallkontakts in der Instant-Messaging-Software zugeordnet ist, umfasst:
gemäß der Rufnummer des Notfallkontakts, Abfragen sämtlicher Instant-Messaging-Software auf dem mobilen Endgerät nach Zielkonten, die der Rufnummer des Notfallkontakts zugeordnet sind; und
gemäß Prioritäten der Instant-Messaging-Software, nacheinander Anrufen aller Zielkonten.

2. Das Verfahren nach Anspruch 1, wobei das Verfahren nach dem Senden (101) einer SIP-Nachricht des ersten Notrufs an ein IMS-Netz ferner umfasst:
Senden einer Kurznachricht an die erste Rufnummer und/oder die Rufnummer des mindestens einen Notfallkontakts und/oder Senden einer Notfallnachricht unter Verwendung der Instant-Messaging-Software an das Zielkonto, das der Rufnummer des Notfallkontakts in der Instant-Messaging-Software zugeordnet ist, wobei
die Kurznachricht oder die Notfallnachricht verwendet wird, um darauf hinzuweisen, dass sich der Benutzer des mobilen Endgeräts in einer Notlage befindet.

3. Ein Notrufverfahren, angewendet auf eine netzseitige Vorrichtung, umfassend:
Empfangen (301) einer von einem mobilen Endgerät gesendeten SIP-Nachricht eines ersten Notrufs, wobei ein Headerfeld der SIP-Nachricht eine erste Information umfasst und die erste Information eine Rufnummer mindestens eines Notfallkontakts umfasst; und
nach Beendigung des ersten Notrufs, fortgesetztes Einleiten (302) eines Notrufs an die aus der ersten Information ausgelesene Rufnummer des mindestens einen Notfallkontakts, unabhängig davon, ob die erste Rufnummer erfolgreich verbunden wird; wobei nach dem fortgesetzten Einleiten (302) eines Notrufs an die aus der ersten Information ausgelesene Rufnummer des mindestens einen Notfallkontakts das Verfahren ferner umfassend:
in einem Fall, in dem der Notruf an die Rufnummer des mindestens einen Notfallkontakts fehlschlägt, Senden einer Anruffehlerinformation an das mobile Endgerät, um dem mobilen Endgerät zu ermöglichen, gemäß der Rufnummer des Notfallkontakts sämtliche Instant-Messaging-Software auf dem mobilen Endgerät nach Zielkonten abzufragen, die der Rufnummer des Notfallkontakts zugeordnet sind; und gemäß Prioritäten der Instant-Messaging-Software, alle Zielkonten nacheinander anzurufen.

4. Eine Notrufvorrichtung (200), angewendet auf ein mobiles Endgerät, umfassend:
ein erstes Sendemodul (201), konfiguriert, um: in einem Fall des Empfangens einer Eingabe eines ersten Notrufs durch einen Benutzer an eine erste Rufnummer eine SIP-Nachricht des ersten Notrufs an ein IMS-Netz zu senden,
ein Headerfeld der SIP-Nachricht umfasst eine erste Information, die erste Information umfasst eine Rufnummer mindestens eines Notfallkontakts, und die Rufnummer des Notfallkontakts wird als angerufenes Ziel verwendet, sodass das IMS-Netz nach dem Einleiten des ersten Notrufs an die erste Rufnummer weiterhin einen Notruf einleitet, unabhängig davon, ob die erste Rufnummer erfolgreich verbunden wird;
wobei die Vorrichtung (200) ferner umfasst:
ein Anrufmodul, konfiguriert, um: in einem Fall des Empfangens einer durch das IMS-Netz gesendeten Anruffehlerinformation einen IP-Netzanruf unter Verwendung von Instant-Messaging-Software an ein Zielkonto einzuleiten, das der Rufnummer des Notfallkontakts in der Instant-Messaging-Software zugeordnet ist;
wobei die Anruffehlerinformation verwendet wird, um anzuzeigen, dass der Notruf an die Rufnummer des mindestens einen Notfallkontakts fehlschlägt;
das Anrufmodul umfassend:
eine Abfrageeinheit, konfiguriert, um: gemäß der Rufnummer des Notfallkontakts sämtliche Instant-Messaging-Software auf dem mobilen Endgerät nach Zielkonten abzufragen, die der Rufnummer des Notfallkontakts zugeordnet sind;
eine Anrufeinheit, konfiguriert, um: gemäß Prioritäten der Instant-Messaging-Software alle Zielkonten nacheinander anzurufen.

5. Eine Notrufvorrichtung (400), angewendet auf eine netzseitige Vorrichtung, umfassend:
ein Empfangsmodul (401), konfiguriert, um eine von einem mobilen Endgerät gesendete SIP-Nachricht eines ersten Notrufs zu empfangen, wobei ein Headerfeld der SIP-Nachricht eine erste Information umfasst und die erste Information eine Rufnummer mindestens eines Notfallkontakts umfasst; und
wobei die Notrufvorrichtung (400) ferner ein Modul für fortgesetzte Anrufe (402) umfasst, konfiguriert, um: nach Beendigung des ersten Notrufs weiterhin einen Notruf an die aus der ersten Information ausgelesene Rufnummer des mindestens einen Notfallkontakts einzuleiten, unabhängig davon, ob die erste Rufnummer erfolgreich verbunden wird;
die Vorrichtung (400) ferner umfassend:
ein drittes Sendemodul, konfiguriert, um: in einem Fall, in dem der Notruf an die Rufnummer des mindestens einen Notfallkontakts fehlschlägt, eine Anruffehlerinformation an das mobile Endgerät zu senden, um dem mobilen Endgerät zu ermöglichen, gemäß der Rufnummer des Notfallkontakts sämtliche Instant-Messaging-Software auf dem mobilen Endgerät nach Zielkonten abzufragen, die der Rufnummer des Notfallkontakts zugeordnet sind; und gemäß Prioritäten der Instant-Messaging-Software alle Zielkonten nacheinander anzurufen.

6. Ein lesbares Speichermedium, **dadurch gekennzeichnet, dass** es ein Programm oder Weisungen speichert, wobei das Programm oder die Weisungen, wenn sie von einem Prozessor ausgeführt werden, das Verfahren nach einem der Ansprüche 1 bis 2 implementieren, oder das Programm oder die Weisungen, wenn sie von einem Prozessor ausgeführt werden, das Verfahren nach Anspruch 3 implementieren.

7. Ein Computerprogrammprodukt, gespeichert in einem nichtflüchtigen Speichermedium, wobei das Programmprodukt, wenn es von mindestens einem Prozessor ausgeführt wird, das Verfahren nach einem der Ansprüche 1 bis 2 implementiert oder um das Verfahren nach Anspruch 3 zu implementieren.

## Revendications

1. Un procédé d'appel d'urgence, appliqué à un terminal mobile, comprenant :
dans le cas de la réception d'une saisie d'un premier le premier appel d'urgence vers un premier numéro, envoyer (101) un message SIP du premier appel d'urgence à un réseau IMS,
un champ d'en-tête du message SIP comprend une première information, la première information comprend un numéro d'au moins un contact d'urgence, et le numéro du contact d'urgence est utilisé comme destination appelée, de sorte que le réseau IMS continue à initier un appel d'urgence après avoir initié le premier appel d'urgence à destination du premier numéro, que le premier numéro soit connecté avec succès ou non ;
dans lequel, après l'envoi (101) d'un message SIP du premier appel d'urgence à un réseau IMS, le procédé comprend en outre :
dans le cas de la réception d'une information d'échec d'appel envoyée par le réseau IMS, initier un appel sur un réseau à protocole Internet (IP) au moyen d'un logiciel de messagerie instantanée à destination d'un compte cible associé au numéro du contact d'urgence dans le logiciel de messagerie instantanée, dans lequel
l'information d'échec d'appel est utilisée pour indiquer que l'appel d'urgence à destination du numéro de l'au moins un contact d'urgence échoue ; dans lequel l'initiation d'un appel sur un réseau à protocole Internet (IP) au moyen d'un logiciel de messagerie instantanée à destination d'un compte cible associé au numéro du contact d'urgence dans le logiciel de messagerie instantanée comprend :
selon le numéro du contact d'urgence, rechercher, parmi tous les logiciels de messagerie instantanée sur le terminal mobile, des comptes cibles associés au numéro du contact d'urgence ; et
selon les priorités des logiciels de messagerie instantanée, appeler tous les comptes cibles un par un.

2. Le procédé selon la revendication 1, dans lequel, après l'envoi (101) d'un message SIP du premier appel d'urgence à un réseau IMS, le procédé comprend en outre :
envoyer un message court au premier numéro et/ou au numéro de l'au moins un contact d'urgence, et/ou envoyer un message d'au moins un appel d'urgence moyen du logiciel de messagerie instantanée au compte cible associé au numéro du contact d'urgence dans le logiciel de messagerie instantanée, dans lequel
le message court ou le message d'urgence est utilisé pour indiquer que l'utilisateur du terminal mobile est dans une situation d'urgence.

3. Un procédé d'appel d'urgence, appliqué à un dispositif côté réseau, comprenant :
recevoir (301) un message SIP d'un premier appel d'urgence envoyé par un terminal mobile, dans lequel un champ d'en-tête du message SIP comprend une première information, et la première information comprend un numéro d'au moins un contact d'urgence ; et
après la fin du premier appel d'urgence, continuer (302) à initier un appel d'urgence à destination du numéro de l'au moins un contact d'urgence extrait de la première information, que le premier numéro soit connecté avec succès ou non ; dans lequel, après le fait de continuer (302) à initier un appel d'urgence à destination du numéro de l'au moins un contact d'urgence extrait de la première information, le procédé comprenant en outre :
dans le cas où l'appel d'urgence à destination du numéro de l'au moins un contact d'urgence échoue, envoyer une information d'échec d'appel au terminal mobile pour permettre au terminal mobile, selon le numéro du contact d'urgence, de rechercher, parmi tous les logiciels de messagerie instantanée sur le terminal mobile, des comptes cibles associés au numéro du contact d'urgence ; et selon les priorités des logiciels de messagerie instantanée, appeler tous les comptes cibles un par un.

4. Un appareil d'appel d'urgence (200), appliqué à un terminal mobile, comprenant :
un premier module d'envoi (201), configuré pour : dans le cas de la réception d'une saisie d'un premier le premier appel d'urgence numéro, envoyer un message SIP du premier appel d'urgence à un réseau IMS,
un champ d'en-tête du message SIP comprend une première information, la première information comprend un numéro d'au moins un contact d'urgence, et le numéro du contact d'urgence est utilisé comme destination appelée, de sorte que le réseau IMS continue à initier un appel d'urgence après avoir initié le premier appel d'urgence à destination du premier numéro, que le premier numéro soit connecté avec succès ou non ;
dans lequel l'appareil (200) comprend en outre :
un module d'appel, configuré pour : dans le cas de la réception d'une information d'échec d'appel envoyée par le réseau IMS, initier un appel sur un réseau à protocole Internet (IP) au moyen d'un logiciel de messagerie instantanée à destination d'un compte cible associé au numéro du contact d'urgence dans le logiciel de messagerie instantanée ;
dans lequel l'information d'échec d'appel est utilisée pour indiquer que l'appel d'urgence à destination du numéro de l'au moins un contact d'urgence échoue ;
le module d'appel comprenant :
une unité de recherche, configurée pour : selon le numéro du contact d'urgence, rechercher, parmi tous les logiciels de messagerie instantanée sur le terminal mobile, des comptes cibles associés au numéro du contact d'urgence ;
une unité d'appel, configurée pour : selon les priorités des logiciels de messagerie instantanée, appeler tous les comptes cibles un par un.

5. Un appareil d'appel d'urgence (400), appliqué à un dispositif côté réseau, comprenant :
un module de réception (401), configuré pour recevoir un message SIP d'un premier appel d'urgence envoyé par un terminal mobile, dans lequel un champ d'en-tête du message SIP comprend une première information, et la première information comprend un numéro d'au moins un contact d'urgence ; et
dans lequel l'appareil d'appel d'urgence (400) comprend en outre un module d'appel continu (402), configuré pour : après la fin du premier appel d'urgence, continuer à initier un appel d'urgence à destination du numéro de l'au moins un contact d'urgence extrait de la première information, que le premier numéro soit connecté avec succès ou non ;
l'appareil (400) comprenant en outre :
un troisième module d'envoi, configuré pour : dans le cas où l'appel d'urgence à destination du numéro de l'au moins un contact d'urgence échoue, envoyer une information d'échec d'appel au terminal mobile pour permettre au terminal mobile, selon le numéro du contact d'urgence, de rechercher, parmi tous les logiciels de messagerie instantanée sur le terminal mobile, des comptes cibles associés au numéro du contact d'urgence ; et selon les priorités des logiciels de messagerie instantanée, appeler tous les comptes cibles un par un.

6. Un support de stockage lisible, **caractérisé par** le stockage d'un programme ou d'instructions, dans lequel le programme ou les instructions, lorsqu'ils sont exécutés par un processeur, mettent en œuvre le procédé selon l'une quelconque des revendications 1 à 2, ou le programme ou les instructions, lorsqu'ils sont exécutés par un processeur, mettent en œuvre le procédé selon la revendication 3.

7. Un produit programme informatique, stocké dans un support de stockage non volatil, dans lequel le produit programme, lorsqu'il est exécuté par au moins un processeur, met en œuvre le procédé selon l'une quelconque des revendications 1 à 2 ou pour mettre en œuvre le procédé selon la revendication 3.
